# EUROPEAN PATENT SPECIFICATION

(11) **EP 0 667 510 B1**
(45) Date of publication and mention of the grant of the patent: **30.08.2000**
(21) Application number: 94309660.2
(22) Date of filing: 21.12.1994
(51) Int. Cl.: G01F 1/74, G01F 15/08

(54) **Fluid flow measurement**
Flüssigkeitsströmungsmessung
Mesurage d'écoulement d'un fluide

(30) Priority: 14.02.1994 GB 9402768
(43) Date of publication of application: 16.08.1995
(73) Proprietor: The BOC Group plc, Windlesham Surrey GU20 6HJ (GB)
(72) Inventor: Wardle, David Grant, Tadworth, Surrey, KT20 7UG (GB)
(74) Representative: Gough, Peter

(56) References cited:
- EP-A- 0 326 231
- FR-A- 2 610 105
- GB-A- 2 089 049
- GB-A- 2 163 558
- MEASUREMENT AND CONTROL, vol. 16, no. 1, January 1983 DORKING, GB, pages 9-13, R.S. MEDLOCK 'THE TECHNIQUES OF FLOW MEASUREMENT (PART 2)'

## Description

The present invention relates to fluid flow measurement and relates particularly to the measurement of fluids present in two phases.

One of the problems associated with measuring the flow of cryogenic liquids, such as for example liquid nitrogen, resides in the fact that it is very difficult to maintain single phase flow. Liquid nitrogen boils at -196°C and hence, unless very complex and expensive refrigeration apparatus are used, the liquid tends to boil off when being passed along a transportation pipe thus creating a two phase flow of liquid and vapour. When both liquid and vapour are present, standard flow measurement methods such as measuring the pressure drop across a calibrated orifice are inaccurate.

There therefore exists a requirement for a fluid flow measurement technique which can accommodate fluid present in two phases.

GB-A-2089049 discloses a method and apparatus for measuring quantity of flow of gaseous-liquid dual-phase fluid in which compound fluid is separated into gaseous-phase and liquid phase, the liquid phase being led into a measuring cylinder in which the quantity of flow through openings and the liquid level are mutually related, in which the liquid flow rate is measured by detecting the liquid level and in which the liquid-phase and gaseous-phase fluids are recombined.

Accordingly, the present invention provides an apparatus for measuring fluid flow of a fluid present in both liquid and vapour form, the apparatus comprising separation means, for separating the fluid flow into its two phases, measuring means for measuring at least the flow rate of the liquid phase, recombining means for recombining the liquid and the gaseous phases prior to the use thereof, and a sealed housing having a generally horizontally extending portion into which the two phase flow is introduced and in which the phase separator is situated, and a generally vertically extending portion extending downwardly from the generally horizontal portion having the liquid flow measuring means and said recombining means situated therein, characterised in that the recombining means comprises a material having a multiplicity of passages therethrough, the arrangement being such that the liquid flow falls from the measuring means onto the recombining means in the presence of the separated vapour so as to recombine therewith during downward passage through the recombining means.

Advantageously, the separation means comprises a material having a multiplicity of passages therethrough.

Conveniently the separation means comprises a volume of metal wool.

In a particularly advantageous arrangement the measuring means comprises a collector vessel having a V shaped outlet for allowing liquid collected therein to drain therefrom at, under steady flow conditions, the same rate as it enters the collector whilst creating a change in liquid level therein indicative of the change in flow through the collector, and means for determining the depth of liquid in the collector thereby to determine the flow rate therethrough.

Preferably, the apparatus further includes an integrating device for integrating the level measurement so as to determine the flow rate therethrough.

An averaging means may be provided for averaging a number of depth measurements, thereby to give a more convenient indication of the volume of fluid passed.

Alternatively, the measuring means comprises a paddle wheel or turbine propeller driven by the flow of liquid, and means for determining the speed of rotation of said wheel so as to determine the flow rate of the liquid.

The apparatus further includes means for measuring the flow of vapour, said means comprising means of measuring the pressure drop across the phase separator thereby to obtain a measure of the vapour passing therethrough.

By measuring the liquid and gas flow it will be possible to determine the LN QUALITY ie. $\frac{\text{GAS}}{\text{LN}}$ = say 60% LN.

The recombining means comprises a material having a multiplicity of passages therethrough, such as for example, a volume of metal wool.

Means may be provided for reducing the velocity of any fluid entering the apparatus.

The present invention will now be more particularly described by way of example only with reference to the accompanying drawings, in which;
Figure 1 is a cross sectional view of a flow measuring apparatus according to the present invention, and
Figure 2 is an enlarged view in the direction of arrow A in Figure 1.
Figure 3 is an alternative form of liquid flow measuring device.

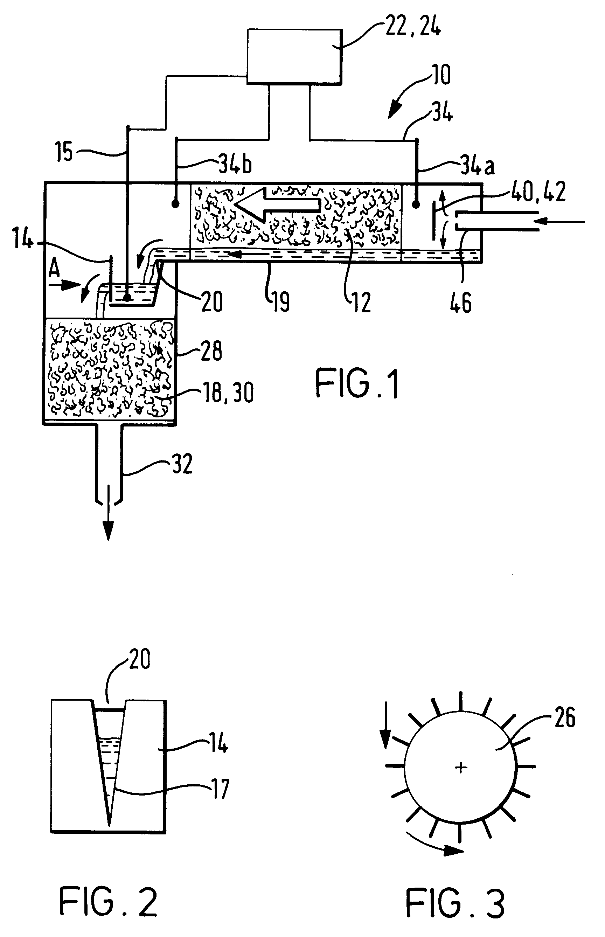

Referring now to the drawings in general but particularly to Figure 1, the apparatus 10 comprises a separation portion 12, for separating the fluid into its two phases, a measuring apparatus 14, and a recombining region 18. The separation portion 12 comprises a generally horizontally extending tube 19 of, for example, 125mm (5 inch) diameter. The tube is provided with a material having a multiplicity of passages therethrough, such as, for example metal wool, which acts to split the fluid into liquid and vapour phases, the liquid flowing along the bottom of the pipe whilst the vapour rises above it and travels along the upper portion of the pipe. Stainless steel wool having a metal to space ratio of 3/7 has been found to be particularly useful. Towards the end of the separation portion 12 a weir 20 acts to allow the liquid phase to fall towards a measuring device 14. In the example shown in Figure 1 the measuring device comprises a collector vessel having a V shaped outlet 17 in its side for allowing liquid collected therein to drain therefrom at, under steady flow conditions, the same rate as it enters the collector whilst creating a change in liquid level therein indicative of the change in flow through the collector. Means in the form of, for example, a capacitance depth probe 15 are provided for determining the depth of liquid in the collector, thereby to determine the flow rate therethrough. An integrating device, shown schematically at 22 may be provided for integrating the output from the depth probe 15 so as to determine the volume of fluid passed therethrough. The output may be averaged over a period of time by averaging means 24.

In an alternative arrangement, the liquid flow measurement device may comprise a paddle wheel or turbine propeller 26 as shown in Figure 3. In operation, the liquid is directed over the wheel in a manner which results in the turning thereof. The speed of rotation of the wheel 26 is directly proportional to the liquid flow rate and hence means (not shown) may be provided for generating an electrical output from the wheel and passing that electrical output to the averaging means 24 if desired.

In either arrangement, separated liquid which has passed through the measuring means 14 is recombined with the vapour flow in a generally vertically downwardly extending portion 28. Portion 28 is provided with a recombining means 30 such as, for example, a volume of steel wool. It will however be appreciated that any other material having a multiplicity of passages passing therethrough may be used. Recombined fluid is directed by pipe 32 towards the apparatus (not shown) in which it is to be consumed.

The flow of vapour through the apparatus 10 may be measured by providing a pressure sensor 34a, 34b at either end of the phase separator 12 and measuring the pressure drop thereacross. The output being convertible to an electronic signal for directing to averaging means 24 if desired.

Means in the form of, for example, a baffle plate 40 or a nozzle which directs any incoming fluid tangentially relative to inlet 46 may be provided for reducing the velocity of the incoming fluid. The reduced velocity fluid is more easily separated and reduces the quantity of vapour present.

In operation, fluid is passed through inlet 46 and separated into liquid and vapour phases by separator 12, each of which are then directed past their own measuring means 14, 34 before being recombined and passed to outlet pipe 32. The outputs from the respective measuring means may be used to determine the individual or combined flows. Additionally, it will be possible to determine the quality of the combined fluid, that is to say the ratio of vapour to liquid.

Such measured values will be useful in the control of the apparatus (not shown) to which the recombined fluid is directed. In a chilling apparatus in which liquid nitrogen is sprayed over food items passing therethrough so as to freeze said items, the flow rate of a fluid having a high concentration of gas might be increased so as to ensure sufficient liquid is available for chilling (liquid nitrogen being more efficient at chilling than gaseous nitrogen).

## Claims

1. An apparatus (10) for measuring fluid flow of a fluid present in both liquid and vapour form, the apparatus comprising separation means (12), for separating the fluid flow into its two phases, measuring means (14) for measuring at least the flow rate of the liquid phase, recombining means (30) for recombining the liquid and the gaseous phases prior to the use thereof, and a sealed housing having a generally horizontally extending portion (19) into which the two phase flow is introduced and in which the phase separator (12) is situated, and a generally vertically extending portion (28) extending downwardly from the generally horizontal portion (19) having the liquid flow measuring means (14) and said recombining means (30) situated therein, characterised in that the recombining means (30) comprises a material having a multiplicity of passages therethrough, the arrangement being such that the liquid flow falls from the measuring means (14) onto the recombining means (30) in the presence of the separated vapour so as to recombine therewith during downward passage through the recombining means.

2. An apparatus as claimed in Claim 1 characterised in that the separation means (12) comprises a material having a multiplicity of passages therethrough.

3. Apparatus as claimed in Claim 1 or 2 characterised in that the separation means (12) and/or the recombining means (30) comprise(s) a volume of metal wool.

4. An apparatus as claimed in any one of Claims 1 to 3 characterised in that the measuring means (14) comprises a collector vessel having a V shaped outlet (17) for allowing liquid collected therein to drain therefrom at, under steady flow conditions, the same rate as it enters the collector vessel whilst creating a change in liquid level therein indicative of the change in flow through the collector, and means (15) for determining the depth of liquid in the collector thereby to determine the flow rate therethrough.

5. An apparatus as claimed in Claim 4 characterised by an integrating device (22) for integrating the level measurement so as to determine the flow rate therethrough.

6. Apparatus as claimed in Claim 4 or Claim 5 characterised by averaging means (24) for averaging a number of depth level measurements thereby to obtain an average flow rate over a given period of time.

7. An apparatus as claimed in any one of Claims 1 to 3 characterised in that the measuring means comprises a paddle wheel (26) driven by the flow of liquid, and means for determining the speed of rotation of said wheel so as to determine the flow rate of the liquid.

8. An apparatus as claimed in any one of Claims 1 to 7 characterised by means (34) for measuring the flow of vapour, said means comprising means of measuring the pressure drop across the phase separator thereby to obtain a measure of the vapour passing therethrough.

9. An apparatus as claimed in any one of Claims 1 to 8 characterised by means (40) for reducing the velocity of the liquid and/or gas as it enters the apparatus.

## Patentansprüche

1. Gerät (10) zur Messung der Strömungsmittelströmung eines sowohl in Flüssigkeits- als auch in Dampfform vorliegenden Strömungsmittels, wobei das Gerät Trennmittel (12) zum Trennen der Flüssigkeitsströmung in ihre beiden Phasen, Meßmittel (14) zur Messung mindestens des Strömungsdurchsatzes der Flüssigkeitsphase, Rekombinationsmittel (30) zum Rekombinieren der Flüssigkeits- und der Gasphase vor deren Gebrauch, und ein abgedichtetes Gehäuse aufweist, das einen etwa horizontal verlaufenden Teil (19), in welchen die Zweiphasenströmung eingeleitet wird und in welchem der Phasentrenner (12) angeordnet ist und einen etwa vertikal verlaufenden Teil (28) umfaßt, der von dem etwa horizontalen Teil (19) abwärts verläuft und die Flüssigkeitsströmungsmeßmittel (14) und die Rekombinationsmittel (30) darin angeordnet aufweist, dadurch gekennzeichnet, daß die Rekombinationsmittel (30) ein Material mit einer Vielzahl von Durchtrittskanälen umfassen, wobei die Anordnung so getroffen ist, daß die Flüssigkeitsströmung von den Meßmitteln (14) auf die Rekombinationsmittel (30) in Anwesenheit des abgeschiedenen Dampfes fallen, so daß sie während des Abwärtsdurchtritts durch die Rekombinationsmittel damit rekombiniert.

2. Gerät nach Anspruch 1, dadurch gekennzeichnet, daß die Trennmittel (12) ein Material umfassen, das eine Vielzahl von Durchtrittskanälen aufweist.

3. Gerät nach Anspruch 1 oder 2, dadurch gekennzeichnet, daß die Trennmittel (12) und/oder die Rekombinationsmittel (30) ein Volumen Metallwolle aufweisen.

4. Gerät nach einem der Ansprüche 1-3, dadurch gekennzeichnet, daß die Meßmittel (14) ein Sammelgefäß aufweisen, das einen V-förmigen Auslaß (17) hat, um darin gesammelte Flüssigkeit unter stationären Stömungsbedingungen mit gleichem Durchsatz daraus ablaufen zu lassen, wie sie in den Sammelbehälter eintritt, während eine Veränderung des Flüssigkeitspegels darin eine Änderung des Durchsatzes durch den Sammler anzeigt, und Mittel (15) zum Bestimmen der Tiefe der Flüssigkeit im Sammler zur Bestimmung des Strömungsdurchsatzes durch diesen aufweist.

5. Gerät nach Anspruch 4, gekennzeichnet durch eine Integriereinrichtung (22) zum Integrieren der Pegelmessung derart, daß der Strömungsdurchsatz bestimmt wird.

6. Gerät nach Anspruch 4 oder 5, gekennzeichnet durch Ausmittelungsmittel (24) zum Ausmitteln einer Anzahl von Tiefenpegelmessungen, um dadurch einen mittleren Strömungsdurchsatz über einer gegebenen Zeitperiode zu erhalten.

7. Gerät nach einem der Ansprüche 1 bis 3, dadurch gekennzeichnet, daß die Meßmittel ein Flügelrad (26) aufweisen, das von der Flüssigkeitssträmung angetrieben wird, und Mittel zur Bestimmung der Drehzahl dieses Rads aufweisen, um den Strömungsdurchsatz der Flüssigkeit zu bestimmen.

8. Gerät nach einem der Ansprüche 1 bis 7, gekennzeichnet durch Mittel (34) zum Messen der Dampfströmung, wobei diese Mittel ihrerseits Mittel zum Messen des Druckabfalls über dem Phasentrenner umfassen, um dadurch eine Messung des hindurchtretenden Dampfes zu erhalten.

9. Gerät nach einem der Ansprüche 1 bis 8, gekennzeichnet durch Mittel (40) zum Vermindern der Geschwindigkeit der Flüssigkeit und/oder des Gases beim Eintritt in das Gerät.

## Revendications

1. Dispositif (10) pour mesurer l'écoulement d'un fluide présent à la fois sous forme liquide et sous forme vapeur, le dispositif comprenant des moyens de séparation (12) pour séparer l'écoulement de fluide en ses deux phases, des moyens de mesure (14) pour mesurer au moins le débit de la phase liquide, des moyens de recombinaison (30) pour recombiner les phases liquide et gazeuse avant leur utilisation, et un boîtier hermétique ayant une section (19) s'étendant globalement horizontalement dans laquelle est introduit l'écoulement biphase et dans laquelle est situé le séparateur (12) de phases, et une section (28) s'étendant globalement verticalement en direction du bas depuis la section globalement horizontale (19), et dans laquelle se trouvent les moyens (14) de mesure du débit de liquide et lesdits moyens de recombinaison (30), ***caractérisé en ce que*** les moyens de recombinaison (30) comprennent un matériau traversé d'une multiplicité de passages, l'agencement étant tel que l'écoulement de liquide tombe des moyens de mesure (14) sur les moyens de recombinaison (30) en présence de la vapeur séparée, de manière à se recombiner à elle durant leur passage vers le bas à travers les moyens de recombinaison.

2. Dispositif selon la Revendication 1, ***caractérisé en ce que*** les moyens de séparation (12) comprennent un matériau traversé par une multiplicité de passages.

3. Dispositif selon la Revendication 1 ou 2, ***caractérisé en ce que*** les moyens de séparation (12) et/ou les moyens de recombinaison (30) comprennent un volume de laine métallique.

4. Dispositif selon l'une quelconque des Revendications 1 à 3, ***caractérisé en ce que*** les moyens de mesure (14) comprennent une cuve collectrice ayant une sortie (17) en forme de V pour permettre au liquide qui s'y trouve de s'en échapper au même débit, en régime d'écoulement stable, que celui avec lequel il entre dans le collecteur, tout en créant un changement du niveau du liquide qui y est contenu, représentatif de la variation de l'écoulement dans le collecteur, et des moyens (15) pour déterminer la hauteur de liquide dans le collecteur afin de déterminer ainsi le débit dans celui-ci.

5. Dispositif selon la Revendication 4, ***caractérisé par*** un dispositif intégrateur (22) destiné à intégrer la mesure de niveau afin de déterminer le débit dans le dispositif.

6. Dispositif selon la Revendication 4 ou 5, ***caractérisé par*** des moyens (24) pour établir une moyenne de plusieurs mesures de hauteur, afin d'obtenir un débit moyen sur une période de temps donnée.

7. Dispositif selon l'une quelconque des Revendications 1 à 3, ***caractérisé en ce que*** les moyens de mesure comprennent une roue (26) à palettes entraînée par l'écoulement de liquide, et des moyens pour déterminer la vitesse de rotation de ladite roue afin de déterminer le débit d'écoulement du liquide.

8. Dispositif selon l'une quelconque des Revendications 1 à 7, ***caractérisé par*** des moyens (34) pour mesurer l'écoulement de vapeur, lesdits moyens comprenant des moyens pour mesurer la chute de pression dans le séparateur de phases afin d'obtenir une mesure de la vapeur qui le traverse.

9. Dispositif selon l'une quelconque des Revendications 1 à 8, ***caractérisé par*** des moyens (40) pour réduire la vitesse du liquide et/ou du gaz quand il entre dans le dispositif.
